# EUROPÄISCHE PATENTANMELDUNG

(11) **EP 4 005 739 A1**
(43) Veröffentlichungstag der Anmeldung: **01.06.2022**
(21) Anmeldenummer: 20210374.3
(22) Anmeldetag: 27.11.2020
(51) Int. Cl.: B25F 5/00, H02J 7/00

(54) **AKKUBETRIEBENE HANDWERKZEUGMASCHINE, AKKUEINHEIT FÜR EINE HANDWERKZEUGMASCHINE, SYSTEM MIT DER HANDWERKZEUGMASCHINE UND EINER AKKUEINHEIT, LADEVORRICHTUNG FÜR EINE AKKUEINHEIT UND SYSTEM MIT EINER AKKUEINHEIT UND EINER LADEVORRICHTUNG**

(71) Anmelder: Hilti Aktiengesellschaft, 9494 Schaan (LI)
(72) Erfinder: Kuhlmann, Kevin, 86916 Kaufering (DE)
(74) Vertreter: Hilti Aktiengesellschaft Corporate Intellectual Property

(57) **Zusammenfassung**

Es wird eine akkubetriebene Handwerkzeugmaschine (1) mit einer Aufnahmebucht (4) zur wiederlösbaren Aufnahme von wenigstens einer Akkueinheit (10, 20, 30) vorgeschlagen. Die Aufnahmebucht (4) weist mindestens vier elektrische Kontakte (K1 - K4) zum Kontaktieren von mindestens vier korrespondierenden Kontakten der wenigstens einen Akkueinheit (10, 20, 30) auf, wobei zwischen einem ersten Kontakt (K1) und einem vierten Kontakt (K4) ein Verbraucher der Handwerkzeugmaschine (1) geschaltet ist, wobei zwischen einem zweiten Kontakt (K2) und einem dritten Kontakt (K3) ein in einen offenen und einen geschlossenen Schaltzustand schaltbarer Schalter (3) geschaltet ist, und wobei über den Schalter (3) eine erste Zellenanordnung (31) mit einer zweiten Zellenanordnung (32) der Akkueinheit (10, 20, 30) oder eine erste Akkueinheit (10) mit einer zweiten Akkueinheit (20) in Reihe verbunden wird.

## Beschreibung

### GEBIET DER ERFINDUNG

Die vorliegende Erfindung betrifft eine akkubetriebene Handwerkzeugmaschine, eine Akkueinheit für eine Handwerkzeugmaschine, ein System mit der Handwerkzeugmaschine und der Akkueinheit, eine Ladevorrichtung für eine Akkueinheit sowie ein System mit einer Akkueinheit und einer Ladevorrichtung.

Akkueinheiten für Handwerkzeugmaschinen weisen häufig eine Mehrzahl von in Reihe miteinander geschalteten Zellen auf, um die Ausgangsspannung der Akkueinheit zu erhöhen. Beispielswiese sind Akkueinheiten mit zehn Lithium-Ionen-Zellen bekannt, die eine Ausgangsspannung von etwa 36 V aufweisen. Eine höhere Ausgangsspannung kann ein Vorteil sein, da bei gleicher elektrischer Leistung ein geringerer Strom fließt, weshalb beispielsweise Leitungsquerschnitte reduziert und Bauelemente für kleinere Ströme verwendet werden können. Zudem kann eine Alterung einer Akkueinheit reduziert sein, da ein geringerer Entladestrom die Akkueinheit weniger belastet.

Allerdings sind höhere Spannungen mit einem höheren Verletzungsrisiko behaftet. Es gibt verschiedene Schutzvorschriften, die beispielsweise vorschreiben, dass ab einer bestimmten maximalen Spannung elektrische Kontakte nicht mehr offenliegen dürfen. Dies erfordert dann einen entsprechend höheren konstruktiven Aufwand und macht entsprechende Geräte komplexer und teurer.

Vor diesem Hintergrund besteht die Aufgabe der vorliegenden Erfindung, eine verbesserte Handwerkzeugmaschine, eine verbesserte Akkueinheit und/oder eine verbesserte Ladevorrichtung zu schaffen.

### OFFENBARUNG DER ERFINDUNG

Gemäß einem ersten Aspekt wird eine akkubetriebene Handwerkzeugmaschine mit einer Aufnahmebucht zur wiederlösbaren Aufnahme von wenigstens einer Akkueinheit vorgeschlagen. Die Aufnahmebucht weist mindestens vier elektrische Kontakte zum Kontaktieren von vier korrespondierenden Kontakten der wenigstens einen Akkueinheit auf, wobei zwischen einem ersten Kontakt und einem vierten Kontakt ein Verbraucher der Handwerkzeugmaschine geschaltet ist, zwischen einem zweiten Kontakt und einem dritten Kontakt ein in einen offenen und einen geschlossenen Schaltzustand schaltbarer Schalter geschaltet ist, und wobei über den Schalter eine erste Zellenanordnung mit einer zweiten Zellenanordnung der Akkueinheit oder eine erste Akkueinheit mit einer zweiten Akkueinheit in Reihe verbunden wird.

Diese Handwerkzeugmaschine weist den Vorteil auf, dass die Handwerkzeugmaschine im Betrieb mit einer hohen Spannung betrieben werden kann, die beispielsweise über der Schutzkleinspannung von 60 V (Gleichstrom) oder einem anderen Schwellwert liegen kann, ohne dass die Kontakte einer Akkueinheit mit besonderen Maßnahmen geschützt werden müssten. Bei Verwendung mehrerer einzelner Akkueinheiten ergibt sich der Vorteil, dass die Akkueinheiten, wenn sie in die Handwerkzeugmaschine eingesetzt sind, im Ruhezustand nicht elektrisch miteinander verbunden sind, was beispielsweise eine Gefahr eines Kurzschlusses und dergleichen reduziert.

Die Handwerkzeugmaschine ist insbesondere als eine Bohrmaschine, ein Schlagbohrer, ein Bohrhammer, eine Handkreissäge, eine Stichsäge, eine Fuchsschwanzsäge, ein Trennschleifer, ein Rührwerk oder dergleichen ausgebildet.

Die Handwerkzeugmaschine kann insbesondere dazu eingerichtet sein, mehr als eine Akkueinheit aufzunehmen, insbesondere um eine erhöhte Betriebsspannung für die Handwerkzeugmaschine zu erreichen. Die Handwerkzeugmaschine kann aber auch mit nur einer Akkueinheit betrieben werden, die die notwendige Betriebsspannung mittels entsprechender Zellenanordnungen bereitstellt. Die Handwerkzeugmaschine kann dementsprechend mit einer, zwei, oder auch mehr als zwei Akkueinheiten betrieben werden. Es sei angemerkt, dass unter "notwendige Betriebsspannung" diejenige Spannung gemeint ist, für die die Handwerkzeugmaschine ausgelegt ist. Es ist daher nicht ausgeschlossen, dass die Handwerkzeugmaschine auch mit einer abweichenden Spannung betrieben werden kann.

Die mindestens vier elektrischen Kontakte sind notwendig, um eine schaltbare Reihenschaltung der Akkueinheiten oder der Zellenanordnungen zu ermöglichen, die von einer Steuerungsvorrichtung der Handwerkzeugmaschine gesteuert wird. Es können zwei Anwendungsfälle unterschieden werden.

Erstens kann eine einzelne Akkueinheit zum Bereitstellen der notwendigen Betriebsspannung eingerichtet sein. Diese Akkueinheit weist intern zwei Zellenanordnungen auf, die elektrisch nicht miteinander verbunden sind, sondern die jeweils über zwei nach außen geführte Kontakte kontaktierbar sind. Wenn der Schalter geschlossen wird, werden die beiden Zellenanordnungen über jeweils einen Kontakt in Reihe miteinander verbunden, wodurch der Stromkreis geschlossen wird und zwischen den beiden verbleibenden Kontakten eine Spannung bereitgestellt wird, die der Summe der Spannungen der beiden Zellenanordnungen entspricht.

Zweitens können zwei (oder mehr als zwei) Akkueinheiten verwendet werden, deren einzelne Spannungen unter der notwendigen Betriebsspannung der Handwerkzeugmaschine liegen. Wenn die Akkueinheiten eingesetzt sind, bleiben sie elektrisch solange voneinander getrennt, bis ein Hauptschalter oder ein Drehmomentregler oder dergleichen von einem Benutzer aktiviert wird. Durch das Schließen des Schalters wird der Stromkreis über die beiden Akkueinheiten geschlossen, so dass ein Strom fließen kann.

In beiden Fällen ist eine Gefahr, die von der Handwerkzeugmaschine ausgeht, reduziert, da insbesondere ein vorbestimmter Schwellwert, beispielsweise ein oberer Grenzwert, für die im Ruhezustand anliegende Spannung in einfacher konstruktiver Weise eingehalten werden kann.

Im Betrieb der Handwerkzeugmaschine wird der Strom zum Antreiben eines Elektromotors der Handwerkzeugmaschine insbesondere über den Schalter geführt. Damit dient der Schalter zugleich als ein die Sicherheit erhöhendes Bauteil, da über diesen die Stromzufuhr zu dem Elektromotor unterbrochen werden kann.

Gemäß einer Ausführungsform der akkubetriebenen Handwerkzeugmaschine ist der Schalter ein von einem Benutzer der Handwerkzeugmaschine manuell bedienbarer Schalter.

Gemäß einer weiteren Ausführungsform der akkubetriebene Handwerkzeugmaschine umfasst der Schalter ein Halbleiter-Bauelement, das durch ein bestimmtes Steuersignal in einen geöffneten Schaltzustand oder einen geschlossenen Schaltzustand versetzbar ist.

Gemäß einer weiteren Ausführungsform der akkubetriebenen Handwerkzeugmaschine ist eine Steuereinrichtung der Handwerkzeugmaschine zum Ausgeben des bestimmten Steuersignals in Abhängigkeit einer Betätigung eines Hauptschalters der Handwerkzeugmaschine eingerichtet.

Gemäß einer weiteren Ausführungsform der akkubetriebenen Handwerkzeugmaschine umfasst der Schalter zwei MOSFETs, die in entgegengesetzter Polung in Reihe geschaltet sind.

Diese Anordnung ist bei der Verwendung von MOSFETs (engl. "metal oxide semiconductor field-effecttransistor") aufgrund der Body-Diode vorteilhaft, da die Body-Diode möglicherweise durchbrechen könnte. Beide MOSFETs werden über das bestimmte Steuersignal geschaltet.

Anstelle von MOSFETs können auch andere Transistor-Typen, wie beispielsweise IGBTs mit Freilaufdiode verwendet werden.

Gemäß einer weiteren Ausführungsform der akkubetriebenen Handwerkzeugmaschine umfasst der Schalter vier MOSFETs, die in zwei zueinander parallelgeschalteten Paaren angeordnet sind, wobei die zwei MOSFETS jedes Paars in entgegengesetzter Polung in Reihe geschaltet sind.

Diese Anordnung ist vorteilhaft, um einerseits eine Redundanz gegenüber dem Ausfall eines MOSFETs zu haben, andererseits ist die Stromtragfähigkeit dieser Anordnung verbessert und die thermische Belastung der einzelnen MOSFETs reduziert. Alle vier MOSFETs werden bevorzugt über das bestimmte Steuersignal geschaltet.

Gemäß einem zweiten Aspekt wird eine Akkueinheit für eine Handwerkzeugmaschine vorgeschlagen. Die Akkueinheit weist eine Mehrzahl von Zellenanordnungen und eine Mehrzahl von nach außen geführten paarweisen Kontakten auf, wobei ein jeweiliges Paar der Mehrzahl mit den Polen einer zugeordneten Zellenanordnung der Mehrzahl verbindbar ist.

Diese Akkueinheit kann vorteilhaft zum Betrieb der Handwerkzeugmaschine gemäß dem ersten Aspekt verwendet werden.

Zwischen den außenliegenden Kontakten und den Polen der jeweiligen Zellenanordnung können passive oder aktive elektronische Bauteile, wie beispielsweise Dioden und dergleichen, angeordnet sein.

Gemäß einer Ausführungsform der Akkueinheit weist jede Zellenanordnung der Mehrzahl eine maximale Ausgangsspannung von unter 60 V auf.

Damit liegt die Ausgangsspannung unter dem oberen Grenzwert für Schutzkleinspannung, weshalb keine besonderen Sicherheitsmaßnahmen zum Schützen der Kontakte notwendig sind.

Gemäß einer Ausführungsform der Akkueinheit umfasst jede Zellenanordnung der Mehrzahl eine Mehrzahl von Lithium-Ionen-Zellen.

Gemäß einer weiteren Ausführungsform der Akkueinheit weist jede Zellenanordnung der Mehrzahl maximal 14 in Reihe geschaltete Lithium-Ionen-Zellen auf.

Diese Ausführungsform hat den Vorteil, dass eine Ladespannung, die zum Laden der jeweiligen Zellenanordnung benötigt wird, unter einem Wert von 60 V (Gleichstrom) liegt. Die Ladespannung für eine einzelne Lithium-Ionen-Zelle beträgt beispielsweise 4,2 V.

Gemäß einer weiteren Ausführungsform der Akkueinheit weist die Akkueinheit genau zwei Zellenanordnungen und vier nach außen geführte Kontakte auf.

Gemäß einer weiteren Ausführungsform der Akkueinheit weist die Akkueinheit genau drei Zellenanordnungen und sechs nach außen geführte Kontakte auf.

Gemäß einem dritten Aspekt wird ein System mit einer akkubetriebenen Handwerkzeugmaschine gemäß dem ersten Aspekt und mit einer Akkueinheit gemäß dem zweiten Aspekt vorgeschlagen.

Die für die Handwerkzeugmaschine und die Akkueinheit beschriebenen Ausführungsformen und Merkmale gelten für das System entsprechend und umgekehrt.

Gemäß einem vierten Aspekt wird eine Ladevorrichtung zum Laden einer Akkueinheit gemäß dem zweiten Aspekt vorgeschlagen. Die Ladevorrichtung ist zum separaten Aufladen jeder Zellenanordnung der Akkueinheit eingerichtet.

Insbesondere umfasst die Ladevorrichtung eine Aufnahmebucht zum Aufnehmen der Akkueinheit und eine der Akkueinheit entsprechende Mehrzahl an paarweisen Kontakten zum Kontaktieren der Kontakte der Akkueinheit. Über ein jeweiliges Kontaktpaar wird die mit dem Kontaktpaar verbindbare Zellenanordnung geladen. Es wird hierbei jede Zellenanordnung getrennt von den weiteren Zellenanordnungen geladen. Die Ladevorrichtung kann hierzu eine entsprechende Mehrzahl von Lade-Schaltkreisen zum Bereitstellen der Ladespannung und des Ladestroms aufweisen. Alternativ kann vorgesehen sein, dass die Ladevorrichtung nur einen Lade-Schaltkreis aufweist, mittels welchem die Zellenanordnungen zeitlich nacheinander geladen werden.

Wenn die Akkueinheit beispielsweise zwei Zelleneinheiten und vier Kontakte aufweist, dann weist die Ladevorrichtung entsprechend vier Kontakte und eine oder zwei Lade-Schaltkreise auf. Wenn die Akkueinheit beispielsweise drei Zelleneinheiten und sechs Kontakte aufweist, dann weist die Ladevorrichtung entsprechend sechs Kontakte und bis zu drei Lade-Schaltkreise auf.

Gemäß einem fünften Aspekt wird ein System mit einer Akkueinheit gemäß dem zweiten Aspekt und mit einer Ladevorrichtung gemäß dem vierten Aspekt vorgeschlagen.

Die für die Akkueinheit und die Ladevorrichtung beschriebenen Ausführungsformen und Merkmale gelten für das System entsprechend und umgekehrt.

Besonders vorteilhaft ist es, wenn die Akkueinheit mehrere Zellenanordnungen mit Lithium-Ionen-Zellen aufweist, wobei eine jeweilige Zellenanordnung maximal 14 in Reihe geschaltete Lithium-Ionen-Zellen umfasst.

Diese Ausführungsform hat den Vorteil, dass eine Ladespannung, die zum Laden der jeweiligen Zellenanordnung benötigt wird, unter einem Wert von 60 V (Gleichstrom) liegt. Die Ladespannung für eine einzelne Lithium-Ionen-Zelle beträgt beispielsweise 4,2 V. Dementsprechend müssen auch für die Ladevorrichtung keine besonderen Sicherheitsvorkehrungen getroffen werden, wie beispielsweise ein Verdecken der Kontakte.

### KURZE BESCHREIBUNG DER FIGUREN

Die nachfolgende Beschreibung erläutert die Erfindung anhand von exemplarischen Ausführungsformen und Figuren. In den Figuren zeigt:
- Fig. 1: eine schematische Ansicht einer akkubetriebenen Handwerkzeugmaschine;
- Fig. 2: eine schematische Schaltungsanordnung;
- Fig. 3: eine schematische Ansicht einer Akkueinheit; und
- Fig. 4: eine schematische Ansicht einer Ladevorrichtung für eine Akkueinheit.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

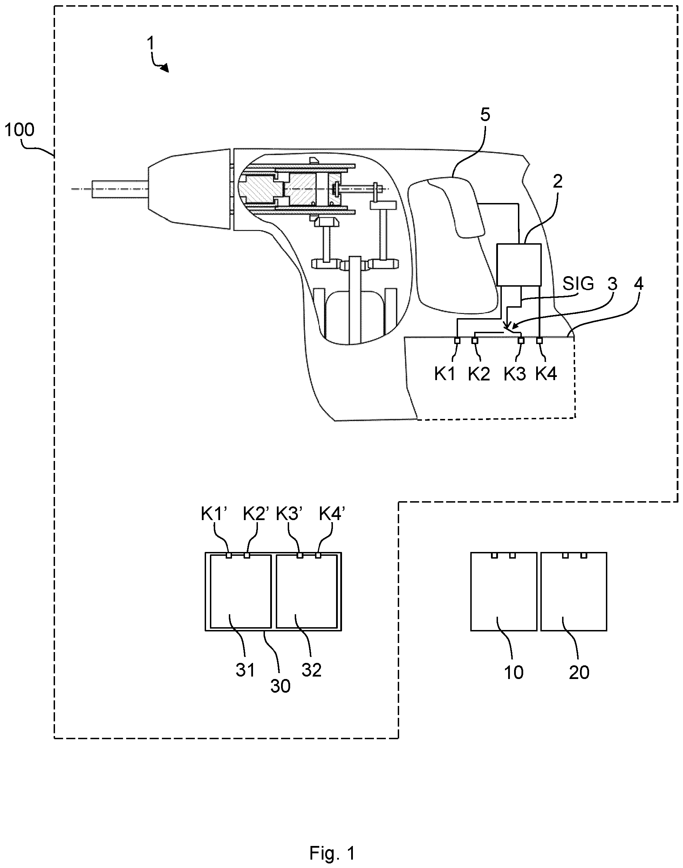

Fig. 1 zeigt eine schematische Ansicht einer akkubetriebenen Handwerkzeugmaschine 1, die hier als ein Schlagbohrer ausgeführt ist. Die Handwerkzeugmaschine 1 weit eine Aufnahmebucht 4 auf, die in diesem Beispiel vier Kontakte K1 - K4 aufweist. Die Aufnahmebucht 4 ist zum Aufnehmen von zwei Akkueinheiten 10, 20 oder zum Aufnehmen einer Akkueinheit 30 eingerichtet. In jedem Fall werden die vier Kontakte K1 - K4 der Aufnahmebucht 4 mit vier korrespondierenden Kontakten K1' - K4' der Akkueinheit 30 oder mit den jeweils zwei Kontaktpaaren der einzelnen Akkueinheiten 10, 20 in Kontakt gebracht.

Zwischen einem ersten Kontakt K1 und einem vierten Kontakt K4 der Aufnahmebucht 4 ist ein Verbraucher der Handwerkzeugmaschine 1 geschaltet, insbesondere ein Elektromotor (ohne Bezugszeichen). In dem dargestellten Beispiel sind die Kontakte K1 und K4 mit einer Steuereinrichtung 2 verbunden, welche den Antriebsstrom für den Elektromotor schaltet. Zwischen einem zweiten Kontakt K2 und einem dritten Kontakt K3 ist ein in einen offenen und einen geschlossenen Schaltzustand schaltbarer Schalter 3 geschaltet. Über den Schalter 3 wird eine erste Zellenanordnung 31 mit einer zweiten Zellenanordnung 32 der Akkueinheit oder aber eine erste Akkueinheit 10 mit einer zweiten Akkueinheit 20 in Reihe verbunden. Durch die Reihenschaltung der Zellenanordnungen 31, 32 oder der Akkueinheiten 10, 20 addieren sich die Ausgangsspannungen der Zellenanordnungen 31, 32 oder der Akkueinheiten 10, 20. Entsprechend kann zwischen dem ersten Kontakt K1 und dem vierten Kontakt K4 eine erhöhte Spannung abgegriffen werden.

Wenn der Schalter 3 offen ist, wie in der Fig. 1 dargestellt, ist der Stromkreis unterbrochen und es kann kein Strom fließen. Dies schließt nicht aus, dass der wenigstens einen Akkueinheit 10, 20, 30 ein Strom entnommen wird, beispielsweise zwischen dem ersten Kontakt K1 und dem zweiten Kontakt K2. Es liegt dann jedoch entsprechend nur eine geringere Spannung vor.

Die Steuereinrichtung 2 ist zum Ausgeben eines bestimmten Steuersignals SIG zum Steuern des Schalters 3 eingerichtet. In diesem Beispiel steuert die Steuereinrichtung 2 den Schalter 3 beispielsweise zum Schließen an, wenn der Hauptschalter 5 der Handwerkzeugmaschine 1 betätigt wird.

Mit dem gestrichelten Kasten ist in der Fig. 1 ein System 100 umfassend eine akkubetriebene Handwerkzeugmaschine 1 und eine Akkueinheit 30 mit mehreren Zellenanordnungen 31, 32 gekennzeichnet.

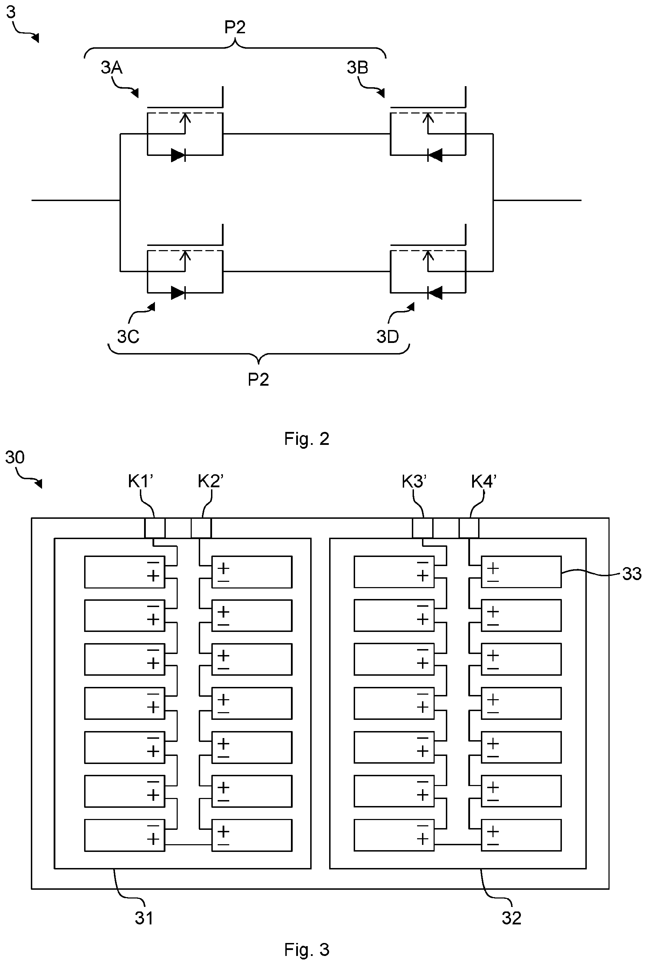

Fig. 2 zeigt eine schematische Schaltungsanordnung für einen Schalter 3, der beispielsweise in der Handwerkzeugmaschine 1 der Fig. 1 verwendet werden kann. Der Schalter 3 umfasst vier als MOSFET ausgebildete Halbleiterelemente 3A, 3B, 3C, 3D. Die vier MOSFETs 3A, 3B, 3C, 3D sind in zwei Paaren P1, P2 angeordnet. Die beiden Paare P1, P2 sind elektrisch parallel zueinander geschaltet. In einem jeweiligen Paar P1, P2 sind die MOSFETs3A, 3B, 3C, 3D mit ihrer Durchlassrichtung entgegengesetzt geschaltet. Um einen Stromfluss durch einen der beiden Zweige zu ermöglichen, müssen daher beide MOSFETsdes jeweiligen Zweigs leitend geschaltet werden.

Vorteilhaft werden alle vier MOSFETs 3A, 3B, 3C, 3D mit dem gleichen bestimmten Steuersignal SIG (siehe Fig. 1) gesteuert, so dass alle gleichzeitig leitend oder nichtleitend geschaltet werden. In der gezeigten Anordnung wird ein Strom, der durch ein jeweiliges MOSFET 3A, 3B, 3C, 3D fließt, gegenüber einer Anordnung von nur zwei MOSFETs 3A, 3B oder 3C, 3D (beispielsweise nur P1 oder P2) halbiert. Damit wird der Schalter 3 insgesamt robuster und zuverlässiger.

Fig. 3 zeigt eine schematische Ansicht einer Akkueinheit 30. Die Akkueinheit 30 kann beispielsweise zum Betreiben der Handwerkzeugmaschine 1 der Fig. 1 verwendet werden. Die Akkueinheit 30 weist zwei Zellenanordnungen 31, 32 auf. Jede Zellenanordnung 31, 32 umfasst eine Mehrzahl an einzelnen Zellen 33, die in Reihe miteinander verbunden sind, wie beispielhaft an der Zellenanordnung 32 dargestellt ist. Es handelt sich beispielsweise um Lithium-Ionen-Zellen 33, von denen jede eine maximale Ausgangsspannung von 3,6 V (bei vollständiger Ladung) bereitstellt. Die vierzehn Zellen 33 erreichen in Reihe geschaltet damit eine maximale Ausgangsspannung von 50,4 V.

Die Akkueinheit 30 weist vier nach außen geführte Kontakte K1' - K4' auf. Jeweils zwei der Kontakte K1' - K4' sind mit den Polen einer zugeordneten Zellenanordnung 31, 32 verbunden. Damit steht beispielsweise an den Kontakte K3' und K4' eine Ausgangsspannung von maximal 50,4 V zur Verfügung. Wenn die beiden Zellenanordnungen 31, 32 im Betrieb der Handwerkzeugmaschine 1 wie anhand der Fig. 1 beschrieben mittels des Schalters 3 (siehe Fig. 1 oder 2) in Reihe geschaltet werden, steht somit eine maximale Ausgangsspannung von 100,8 V bereit.

Es sei angemerkt, dass die Akkueinheit 30 auch mehr als zwei Zellenanordnungen 31, 32 und eine jeweilige Zellenanordnung 31, 32 mehr oder weniger als vierzehn in Reihe geschaltete Zellen 33 aufweisen kann. Insbesondere muss die Anzahl an in Reihe geschalteter Zellen 33 nicht für alle Zellenanordnungen 31, 32 identisch sein, sondern kann sich unterscheiden.

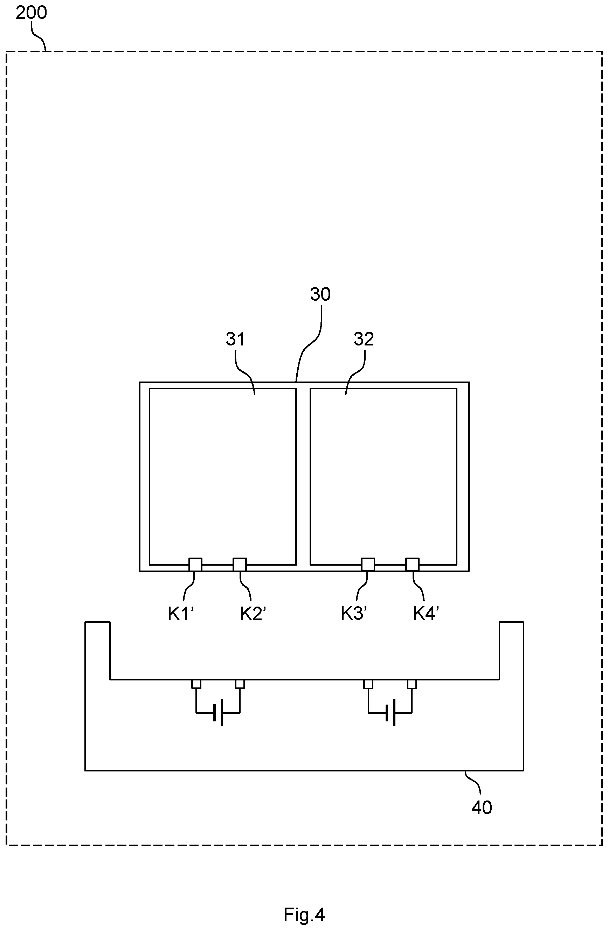

Fig. 4 zeigt eine schematische Ansicht einer Ladevorrichtung 40 für eine Akkueinheit 30. Es handelt sich bei der Akkueinheit 30 beispielsweise um die Akkueinheit der Fig. 1 oder der Fig. 3. Die Ladevorrichtung 40 weist zu der Akkueinheit 30 korrespondierende Kontaktpaare (ohne Bezugszeichen) auf, so dass jede Zellenanordnung 31, 32 der Akkueinheit 30 separat geladen werden kann. In diesem Beispiel weist die Ladevorrichtung 40 hierzu jeweils eine geregelte Stromquelle (ohne Bezugszeichen) auf, die zum Bereitstellen eines geregelten Ladestroms mit einer bestimmten Ladespannung eingerichtet sind.

Wenn die Akkueinheit 30, wie anhand der Fig. 3 beschrieben, maximal vierzehn Lithium-Ionen Zellen 33 (siehe Fig. 3) aufweist, dann liegt die maximale Ladespannung bei 58,8 V (4,2 V pro Zelle) und damit vorteilhaft unter dem Schwellwert für die Schutzkleinspannung von 60 V.

Mit dem gestrichelten Kasten ist in der Fig. 4 ein System 200 umfassend eine Akkueinheit 30 mit mehreren Zellenanordnungen 31, 32 und eine Ladevorrichtung 40 gekennzeichnet.

### BEZUGSZEICHENLISTE

- 1: akkubetriebene Handwerkzeugmaschine
- 2: Steuereinrichtung
- 3: Schalter
- 3A: MOSFET
- 3B: MOSFET
- 3C: MOSFET
- 3D: MOSFET
- 4: Aufnahmebucht
- 5: Hauptschalter
- 10: Akkueinheit
- 20: Akkueinheit
- 30: Akkueinheit
- 31: Zellenanordnung
- 32: Zellenanordnung
- 33: Zelle
- 100: System
- 200: System

- K1: Kontakt
- K1': Kontakt
- K2: Kontakt
- K2': Kontakt
- K3: Kontakt
- K3': Kontakt
- K4: Kontakt
- K4': Kontakt
- P1: Paar
- P2: Paar
- SIG: Steuersignal

## Patentansprüche

1. Akkubetriebene Handwerkzeugmaschine (1) mit einer Aufnahmebucht (4) zur wiederlösbaren Aufnahme von wenigstens einer Akkueinheit (10, 20, 30), wobei die Aufnahmebucht (4) mindestens vier elektrische Kontakte (K1 - K4) zum Kontaktieren von mindestens vier korrespondierenden Kontakten der wenigstens einen Akkueinheit (10, 20, 30) aufweist, wobei zwischen einem ersten Kontakt (K1) und einem vierten Kontakt (K4) ein Verbraucher der Handwerkzeugmaschine (1) geschaltet ist, wobei zwischen einem zweiten Kontakt (K2) und einem dritten Kontakt (K3) ein in einen offenen und einen geschlossenen Schaltzustand schaltbarer Schalter (3) geschaltet ist, und wobei über den Schalter (3) eine erste Zellenanordnung (31) mit einer zweiten Zellenanordnung (32) der Akkueinheit (10, 20, 30) oder eine erste Akkueinheit (10) mit einer zweiten Akkueinheit (20) in Reihe verbunden wird.

2. Akkubetriebene Handwerkzeugmaschine nach Anspruch 1, **dadurch gekennzeichnet, dass** der Schalter (3) ein von einem Benutzer der Handwerkzeugmaschine (1) manuell bedienbarer Schalter ist.

3. Akkubetriebene Handwerkzeugmaschine nach Anspruch 1, **dadurch gekennzeichnet, dass** der Schalter (3) ein Halbleiter-Bauelement umfasst, das durch ein bestimmtes Steuersignal (SIG) in einen geöffneten Schaltzustand oder einen geschlossenen Schaltzustand versetzbar ist.

4. Akkubetriebene Handwerkzeugmaschine nach Anspruch 3, **dadurch gekennzeichnet, dass** eine Steuereinrichtung (2) zum Ausgeben des Steuersignals (SIG) in Abhängigkeit einer Betätigung eines Hauptschalters (5) der Handwerkzeugmaschine (1) eingerichtet ist.

5. Akkubetriebene Handwerkzeugmaschine nach Anspruch 3 oder 4, **dadurch gekennzeichnet, dass** der Schalter (3) zwei MOSFETs (3A, 3B) umfasst, die in entgegengesetzter Polung in Reihe geschaltet sind.

6. Akkubetriebene Handwerkzeugmaschine nach Anspruch 5, **dadurch gekennzeichnet, dass** der Schalter (3) vier MOSFETs (3A, 3B, 3C, 3D) umfasst, die in zwei zueinander parallelgeschalteten Paaren (P1, P2) angeordnet sind, wobei die zwei MOSFETS jedes Paars (P1, P2) in entgegengesetzter Polung in Reihe geschaltet sind.

7. Akkueinheit (30) für eine Handwerkzeugmaschine (1), aufweisend eine Mehrzahl von Zellenanordnungen (31, 32) und eine Mehrzahl von nach außen geführten paarweisen Kontakten (K1', K2', K3', K4'), wobei ein jeweiliges Paar der Mehrzahl mit den Polen einer zugeordneten Zellenanordnung (31, 32) der Mehrzahl verbindbar ist.

8. Akkueinheit nach Anspruch 7, **dadurch gekennzeichnet, dass** jede Zellenanordnung (31, 32) eine maximale Ausgangsspannung von unter 60 V aufweist.

9. Akkueinheit nach Anspruch 7 oder 8, **dadurch gekennzeichnet, dass** jede Zellenanordnung (31, 32) eine Mehrzahl von Lithium-Ionen-Zellen (33) umfasst.

10. Akkueinheit nach Anspruch 9, **dadurch gekennzeichnet, dass** jede Zellenanordnung (31, 32) maximal 14 in Reihe geschaltete Lithium-Ionen-Zellen (33) aufweist.

11. Akkueinheit nach einem der Ansprüche 7 - 10, **dadurch gekennzeichnet, dass** die Akkueinheit (30) genau zwei Zellenanordnungen (31, 32) und vier nach außen geführte Kontakte (K1', K2', K3', K4') aufweist.

12. Akkueinheit nach einem der Ansprüche 7 - 10, **dadurch gekennzeichnet, dass** die Akkueinheit (30) genau drei Zellenanordnungen (31, 32) und sechs nach außen geführte Kontakte (K1', K2', K3', K4') aufweist.

13. System (100) mit einer akkubetriebenen Handwerkzeugmaschine (1) nach einem der Ansprüche 1 - 6 und einer Akkueinheit (30) nach einem der Ansprüche 7 - 12.

14. Ladevorrichtung (40) zum Laden einer Akkueinheit (30) gemäß einem der Ansprüche 7 - 12, wobei die Ladevorrichtung (40) zum separaten Aufladen jeder Zellenanordnung (31, 32) der Akkueinheit (30) eingerichtet ist.

15. System (200) mit einer Akkueinheit (30) nach einem der Ansprüche 7 - 12 und einer Ladevorrichtung (40) nach Anspruch 14.
